(19) Europäisches Patentamt
European Patent Office
Office européen des brevets

(11) **EP 4 589 468 A1**

(12) **EUROPEAN PATENT APPLICATION**

(43) Date of publication:
**23.07.2025 Bulletin 2025/30**

(21) Application number: **25150248.0**

(22) Date of filing: **03.01.2025**

(51) International Patent Classification (IPC):
***G06F 40/30*** (2020.01)     ***G06Q 30/0601*** (2023.01)

(52) Cooperative Patent Classification (CPC):
**G06Q 30/0631; G06F 40/30**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.01.2024 IN 202421003421**

(71) Applicant: **Tata Consultancy Services Limited Maharashtra (IN)**

(72) Inventors:
• **RATHINASABAPATHY, SRIDHAR**
  **600097 Chennai, Tamil Nadu (IN)**
• **SACHDEVA, PUNEET**
  **110001 New Delhi, Delhi (IN)**
• **RAMASAMY, PURUSHOTHAMAN**
  **600097 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **NATURAL LANGUAGE PROCESSING (NLP) BASED SYSTEMS AND METHODS FOR RECOMMENDATION OF ITEMS**

(57)     Conventionally industries delt with diverse categories of products/items recommendation. This gave rise to a display taxonomy for the products. The art of matching products/items with certainty is critical to infer price gaps, which can significantly alter a competitive landscape. Manually comparing product features is time-consuming and error-prone, leading to inaccurate results. Present disclosure provides systems and methods that receive items pertaining to various entities (retail and competitor's) which are pre-processed to obtain pre-processed dataset. Taxonomy codes are tagged to a subset of items amongst pre-processed dataset to obtain code tagged items having attributes. The attributes are converted to feature vectors, and models are built using code tagged items and feature vectors. Using the models, a third set of items is obtained, and features are extracted accordingly. NLP engines process taxonomy code, an associated taxonomy level, and a value of the features for recommending items and are categorized accordingly.

FIG. 2

**Description**

CROSS-REFERENCE TO RELATED APPLICATIONS AND PRIORITY

The present application claims priority to Indian application no. 202421003421, filed on January 17, 2024.

TECHNICAL FIELD

The disclosure herein generally relates to natural language processing (NLP) techniques, and, more particularly, to natural language processing (NLP) based systems and methods for recommendation of items.

BACKGROUND

Various industries deal with diverse categories of products. For instance, the retail industry has diverse categories of products/items such as food, fashion, alcohol, dairy, pantries, electronics, health, beauty, home improvement, office supplies, footwear, furniture, and so on. These categories are further sub-divided into multiple sub-categories with many levels to drill down with finer nuances of products. This gives rise to a display taxonomy for the products on e-commerce websites. This taxonomy may be either shallow or deep, based on a scheme of things.

With the ever-increasing width and depth of assortment in the digital era, it is essential to understand how a product is placed in terms of price, offers, discounts, and so on, in comparison to competitors. This intelligence is required on a real-time or near-real-time basis, to stay competitive and relevant to consumers. Hence, matching similar items from competitors' vast gamut of products is quite challenging.

The complexity of product matching comes to the fore as there is no specified standard for the attributes used in product definition, hence the same varies with each competitor. The descriptions and images vary extensively, and language also differs if competitors are spread across geographies. The art of matching products with certainty is critical to infer price gaps, which can significantly alter a retailer's competitive landscape. Manually comparing product features is time-consuming and error-prone, leading to inaccurate results.

SUMMARY

Embodiments of the present disclosure present technological improvements as solutions to one or more of the above-mentioned technical problems recognized by the inventors in conventional systems.

For example, in one aspect, there is provided a processor implemented method for recommendation of items. The method comprises receiving, via one or more hardware processors, information comprising a first set of items pertaining to a first entity, and a second set of items pertaining to a second entity; pre-processing, via the one or more hardware processors, the information comprising the first set of items pertaining to the first entity and the second set of items pertaining to the second entity to obtain a pre-processed dataset; obtaining, via the one or more hardware processors, a taxonomy code to at least a subset of items amongst the pre-processed dataset to obtain a set of code tagged items, wherein each code tagged item amongst the set of code tagged items is associated with one or more attributes; converting, by using a sentence encoder via the one or more hardware processors, the one or more attributes comprised in the set of code tagged items into a feature vector, wherein the feature vector is associated with the first set of items and the second set of items; building, via the one or more hardware processors, a first model and a second model using the set of code tagged items and the feature vector; predicting, by using the first model and the second model via the one or more hardware processors, (i) a first taxonomy level-based value, and (ii) the taxonomy code for each remaining item amongst the pre-processed dataset, respectively to obtain a third set of items; extracting, via the one or more hardware processors, one or more features from the subset of items, and the third set of items; processing, via the one or more hardware processors, the taxonomy code, an associated taxonomy level, and a value associated with the one or more features in a plurality of natural language processing (NLP) engines to obtain a first set of recommended items; applying, via the one more hardware processors, one or more rules on the first set of recommended items to obtain a fourth set of items, wherein each rule is associated with at least one NLP engine amongst the plurality of NLP engines; grouping, via the one more hardware processors, one or more items from the fourth set of items into one or more categories; and recommending, via the one or more hardware processors, at least a subset of items amongst the fourth set of items to obtain a second set of recommended items, wherein the second set of recommended items is based on a weightage associated to each of the plurality of NLP engines.

In an embodiment, the step of obtaining the taxonomy code is based on at least one of an associated item category and an associated item sub-category.

In an embodiment, the step of extracting the one or more features from the subset of items, and the third set of items comprises concatenating one or more attributes associated with the subset of items, and the third set of items;

obtaining a predefined attribute value for each taxonomy code of the subset of items, and the third set of items; performing a comparison of keywords between the subset of items, and the third set of items; and extracting the one or more features from the subset of items, and the third set of items based on the comparison and the predefined attribute value.

In an embodiment, the step of processing by a first NLP engine amongst the plurality of NLP engines comprises filtering the second set of items for each item comprised in the first set of items based on the taxonomy code; creating a feature summary for the first set of items and the second set of items based on the value of the one or more features; converting the feature summary into the feature vector of the first set of items and the second set of items; computing a cosine similarity score for the first set of items and the second set of items based on the feature vector of the first set of items and the second set of items; and obtaining the first set of recommended items based on the cosine similarity score.

In an embodiment, wherein the step of processing by a second NLP engine amongst the plurality of NLP engines comprises for each taxonomy code: traversing through the associated taxonomy level for determining a match between an item of the first set of items and an item of the second set of items to obtain a set of level-based items; concatenating one or more attributes of the set of level-based items to obtain a set of concatenated attributes; converting the set of concatenated attributes into the feature vector of the first set of items and the second set of items; computing a cosine distance score between the first set of items and the second set of items based on the feature vector of the first set of items and the second set of items; computing a taxonomy based matching score based on the cosine distance score; and obtaining the first set of recommended items based on the taxonomy based matching score.

In an embodiment, the step of processing by a third NLP engine amongst the plurality of NLP engines comprises creating an index of the second set of items; identifying a semantic match for a query item associated with the first set of items in the index of the second set of items; computing a semantic matching score based on the semantic match; and obtaining the first set of recommended items based on the semantic matching score.

In an embodiment, the step of processing by a fourth NLP engine amongst the plurality of NLP engines comprises performing a comparison of a name associated with each item amongst the first of items with each item amongst the second of items; computing a string matching score based on the comparison; and obtaining the first set of recommended items based on the string matching score.

In an embodiment, the step of grouping, comprises grouping one or more items into a first category based on an item comprised in the first set of recommended items that is recommended by a first combination of NLP engines; grouping one or more items into a second category based on an item comprised in the first set of recommended items that is recommended by a second combination of NLP engines; grouping one or more items into a third category based on an item comprised in the first set of recommended items that is recommended by a third combination of NLP engines; and grouping one or more items into a fourth category based on an item comprised in the first set of recommended items that is recommended by a NLP engine.

In an embodiment, the weightage associated to each of the plurality of NLP engines is determined based on a match of an item comprised in the fourth set of items with an associated item amongst the second set of items.

In an embodiment, the method further comprises updating the weightage of each of the plurality of NLP engines based on a comparison of (i) one or more items amongst the second set of recommended items, and (ii) a fifth set of items; and sorting the second set of recommended items based on the updated weightage.

In another aspect, there is provided a processor implemented system for recommendation of items. The system comprises: a memory storing instructions; one or more communication interfaces; and one or more hardware processors coupled to the memory via the one or more communication interfaces, wherein the one or more hardware processors are configured by the instructions to receive information comprising a first set of items pertaining to a first entity, and a second set of items pertaining to a second entity; pre-process the information comprising the first set of items pertaining to the first entity and the second set of items pertaining to the second entity to obtain a pre-processed dataset; obtain a taxonomy code to at least a subset of items amongst the pre-processed dataset to obtain a set of code tagged items, wherein each code tagged item amongst the set of code tagged items is associated with one or more attributes; convert, by using a sentence encoder, the one or more attributes comprised in the set of code tagged items into a feature vector, wherein the feature vector is associated with the first set of items and the second set of items; building, via the one or more hardware processors, a first model and a second model using the set of code tagged items and the feature vector; predicting, by using the first model and the second model, (i) a first taxonomy level-based value, and (ii) the taxonomy code for each remaining item amongst the pre-processed dataset, respectively to obtain a third set of items; extract, one or more features from the subset of items, and the third set of items; process the taxonomy code, an associated taxonomy level, and a value associated with the one or more features in a plurality of natural language processing (NLP) engines to obtain a first set of recommended items; apply one or more rules on the first set of recommended items to obtain a fourth set of items, wherein each rule is associated with at least one NLP engine amongst the plurality of NLP engines; group one or more items from the fourth set of items into one or more categories; and recommend at least a subset of items amongst the fourth set of items to obtain a second set of recommended items, wherein the second set of recommended items is based on a weightage associated to each of the plurality of NLP engines.

In an embodiment, the taxonomy code is obtained based on at least one of an associated item category and an associated item sub-category.

In an embodiment, the one or more features are extracted from the subset of items, and the third set of items by concatenating one or more attributes associated with the subset of items, and the third set of items; obtaining a predefined attribute value for each taxonomy code of the subset of items, and the third set of items; performing a comparison of keywords between the subset of items, and the third set of items; and extracting the one or more features from the subset of items, and the third set of items based on the comparison and the predefined attribute value.

In an embodiment, a first NLP engine amongst the plurality of NLP engines processes the taxonomy code, the associated taxonomy level, and the value associated with the one or more features by filtering the second set of items for each item comprised in the first set of items based on the taxonomy code; creating a feature summary for the first set of items and the second set of items based on the value of the one or more features; converting the feature summary into the feature vector of the first set of items and the second set of items; computing a cosine similarity score for the first set of items and the second set of items based on the feature vector of the first set of items and the second set of items; and obtaining the first set of recommended items based on the cosine similarity score.

In an embodiment, a second NLP engine amongst the plurality of NLP engines processes the taxonomy code, the associated taxonomy level, and the value associated with the one or more features by performing for each taxonomy code: traversing through the associated taxonomy level for determining a match between an item of the first set of items and an item of the second set of items to obtain a set of level-based items; concatenating one or more attributes of the set of level-based items to obtain a set of concatenated attributes; converting the set of concatenated attributes into the feature vector of the first set of items and the second set of items; computing a cosine distance score between the first set of items and the second set of items based on the feature vector of the first set of items and the second set of items; computing a taxonomy based matching score based on the cosine distance score; and obtaining the first set of recommended items based on the taxonomy based matching score.

In an embodiment, a third NLP engine amongst the plurality of NLP engines processes the taxonomy code, the associated taxonomy level, and the value associated with the one or more features by creating an index of the second set of items; identifying a semantic match for a query item associated with the first set of items in the index of the second set of items; computing a semantic matching score based on the semantic match; and obtaining the first set of recommended items based on the semantic matching score.

In an embodiment, a fourth NLP engine amongst the plurality of NLP engines processes the taxonomy code, the associated taxonomy level, and the value associated with the one or more features by performing a comparison of a name associated with each item amongst the first of items with each item amongst the second of items; computing a string matching score based on the comparison; and obtaining the first set of recommended items based on the string matching score.

In an embodiment, the one or more categories are obtained by grouping one or more items into a first category based on an item comprised in the first set of recommended items that is recommended by a first combination of NLP engines; grouping one or more items into a second category based on an item comprised in the first set of recommended items that is recommended by a second combination of NLP engines; grouping one or more items into a third category based on an item comprised in the first set of recommended items that is recommended by a third combination of NLP engines; and grouping one or more items into a fourth category based on an item comprised in the first set of recommended items that is recommended by a NLP engine.

In an embodiment, the weightage associated to each of the plurality of NLP engines is determined based on a match of an item comprised in the fourth set of items with an associated item amongst the second set of items.

In an embodiment, the one or more hardware processors are further configured by the instructions to update the weightage of each of the plurality of NLP engines based on a comparison of (i) one or more items amongst the second set of recommended items, and (ii) a fifth set of items; and sort the second set of recommended items based on the updated weightage.

In yet another aspect, there are provided one or more non-transitory machine-readable information storage mediums comprising one or more instructions which when executed by one or more hardware processors cause recommendation of items by receiving information comprising a first set of items pertaining to a first entity, and a second set of items pertaining to a second entity; pre-processing the information comprising the first set of items pertaining to the first entity and the second set of items pertaining to the second entity to obtain a pre-processed dataset; obtaining a taxonomy code to at least a subset of items amongst the pre-processed dataset to obtain a set of code tagged items, wherein each code tagged item amongst the set of code tagged items is associated with one or more attributes; converting, by using a sentence encoder, the one or more attributes comprised in the set of code tagged items into a feature vector, wherein the feature vector is associated with the first set of items and the second set of items; building a first model and a second model using the set of code tagged items and the feature vector; predicting, by using the first model and the second model, (i) a first taxonomy level-based value, and (ii) the taxonomy code for each remaining item amongst the pre-processed dataset, respectively to obtain a third set of items; extracting one or more features from the subset of items, and the third set of items; processing the taxonomy code, an associated taxonomy level, and a value associated with the one or more features in a plurality of natural language processing (NLP) engines to obtain a first set of recommended items; applying, via the one more hardware processors, one or more rules on the first set of recommended items to obtain a fourth set of items, wherein each rule is associated with at least one NLP engine amongst the plurality of NLP engines; grouping, via the one more hardware processors, one or more items from the fourth set of items into one or more categories; and recommending at least a subset of items amongst the fourth set of items to obtain a second set of recommended items, wherein the second set of recommended items is based on a weightage associated to each of the plurality of NLP engines.

In an embodiment, the step of obtaining the taxonomy code is based on at least one of an associated item category and an associated item sub-category.

In an embodiment, the step of extracting the one or more features from the subset of items, and the third set of items comprises concatenating one or more attributes associated with the subset of items, and the third set of items; obtaining a predefined attribute value for each taxonomy code of the subset of items, and the third set of items; performing a comparison of keywords between the subset of items, and the third set of items; and extracting the one or more features from the subset of items, and the third set of items based on the comparison and the predefined attribute value.

In an embodiment, the step of processing by a first NLP engine amongst the plurality of NLP engines comprises filtering the second set of items for each item comprised in the first set of items based on the taxonomy code; creating a feature summary for the first set of items and the second set of items based on the value of the one or more features; converting the feature summary into the feature vector of the first set of items and the second set of items; computing a cosine similarity score for the first set of items and the second set of items based on the feature vector of the first set of items and the second set of items; and obtaining the first set of recommended items based on the cosine similarity score.

In an embodiment, the step of processing by a second NLP engine amongst the plurality of NLP engines comprises for each taxonomy code: traversing through the associated taxonomy level for determining a match between an item of the first set of items and an item of the second set of items to obtain a set of level-based items; concatenating one or more attributes of the set of level-based items to obtain a set of concatenated attributes; converting the set of concatenated attributes into the feature vector of the first set of items and the second set of items; computing a cosine distance score between the first set of items and the second set of items based on the feature vector of the first set of items and the second set of items; computing a taxonomy based matching score based on the cosine distance score; and obtaining the first set of recommended items based on the taxonomy based matching score.

In an embodiment, the step of processing by a third NLP engine amongst the plurality of NLP engines comprises creating an index of the second set of items; identifying a semantic match for a query item associated with the first set of items in the index of the second set of items; computing a semantic matching score based on the semantic match; and obtaining the first set of recommended items based on the semantic matching score.

In an embodiment, the step of processing by a fourth NLP engine amongst the plurality of NLP engines comprises performing a comparison of a name associated with each item amongst the first of items with each item amongst the second of items; computing a string matching score based on the comparison; and obtaining the first set of recommended items based on the string matching score.

In an embodiment, the step of grouping comprises grouping one or more items into a first category based on an item comprised in the first set of recommended items that is recommended by a first combination of NLP engines; grouping one or more items into a second category based on an item comprised in the first set of recommended items that is recommended by a second combination of NLP engines; grouping one or more items into a third category based on an item comprised in the first set of recommended items that is recommended by a third combination of NLP engines; and grouping one or more items into a fourth category based on an item comprised in the first set of recommended items that is recommended by a NLP engine.

In an embodiment, the weightage associated to each of the plurality of NLP engines is determined based on a match of an item comprised in the fourth set of items with an associated item amongst the second set of items.

In an embodiment, the instructions which when executed by the one or more hardware processors further cause updating the weightage of each of the plurality of NLP engines based on a comparison of (i) one or more items amongst the second set of recommended items, and (ii) a fifth set of items; and sorting the second set of recommended items based on the updated weightage.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 depicts an exemplary natural language processing (NLP) based system for recommendation of items, in accordance with an embodiment of the present disclosure.

FIG. 2 depicts an exemplary high level block diagram of the NLP based system of FIG. 1 for recommendation of items, in accordance with an embodiment of the present disclosure.

FIGS. 3A and 3B depict an exemplary flow chart illustrating a NLP based method for recommendation of items, using the systems of FIGS. 1-2, in accordance with an embodiment of the present disclosure.

FIG. 4 depicts an exemplary merchandise taxonomy, in accordance with an embodiment of the present disclosure.

FIG. 5 depicts a graphical representation of recalled percentage against labelled matches of items, in accordance with an embodiment of the present disclosure.

FIG. 6 depicts a graphical representation illustrating time taken for item matching (throughput) by the method of the present disclosure and conventional approach(es), in accordance with an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As mentioned earlier, industries deal with diverse categories of products. For instance, the retail industry has diverse categories of products/items such as food, fashion, alcohol, dairy, pantries, electronics, health, beauty, home improvement, office supplies, footwear, furniture, and so on. These categories are further sub-divided into multiple sub-categories with many levels to drill down with finer nuances of products. This gives rise to a display taxonomy for the products on e-commerce websites. This taxonomy may be either shallow or deep, based on a scheme of things.

The complexity of product matching comes to the fore as there is no specified standard for the attributes used in product definition, hence the same varies with each competitor. The descriptions and images vary extensively, and language also differs if competitors are spread across geographies. The art of matching products with certainty is critical to infer price gaps, which can significantly alter a retailer's competitive landscape. Manually comparing product features is time-consuming and error-prone, leading to inaccurate results.

Embodiments of the present disclosure provide systems and methods that implement various natural language processing (NLP) engines for recommendation of items. More specifically, items (e.g., first set of items and second set of items) pertaining to various entities (e.g., say retail and competitor's) are fed as input to the system and pre-processed to obtain pre-processed dataset. Taxonomy code are then tagged to at least to a subset of items amongst the pre-processed dataset to obtain code tagged items. The code tagged items have one or more associated attributes. The attributes are then converted to feature vectors which are associated with items of the entities. Further, specific models are built using the code tagged items and feature vectors. Using the specific models, (i) a first taxonomy level-based value, and (ii) the taxonomy code are predicted for each remaining item amongst the pre-processed dataset, respectively to obtain a third set of items. Further, features are extracted from the subset of items and the third set of items. Further, the system 100 implements a plurality of NLP engines which process the taxonomy code, an associated taxonomy level, and a value associated with the one or more features in the NLP engines to obtain a first set of recommended items. Rules are then applied on the first set of recommended items to obtain a fourth set of items and items from the fourth set are grouped into various categories for further recommendation of items (e.g., also referred to as second set of recommended items). This second set of recommended items is provided to the first entity (e.g., say a retailer) who can then analyse and perform a price and offer analysis in view of the second set of items of the second entity (e.g., say competition).

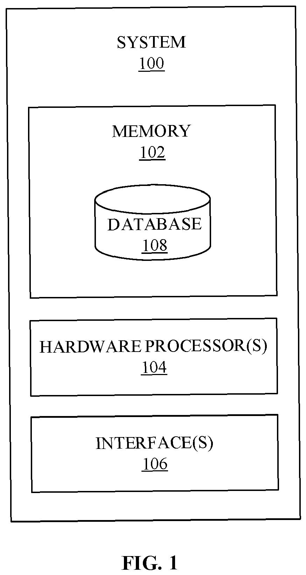

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 depicts an exemplary natural language processing (NLP) based system 100 for recommendation of items, in accordance with an embodiment of the present disclosure. In an embodiment, the system 100 may also be referred to as 'recommendation system' or 'items recommendation system' and may be interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information of items, associated categories pertaining to various entities (e.g., entity 1, entity 2, and so on). The database 108 further comprises taxonomy codes, taxonomy levels, attributes of the items, feature vectors of the items, and the like. The memory 102 stores various NLP engines which when executed enable the system 100 to perform specific operations/steps of the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

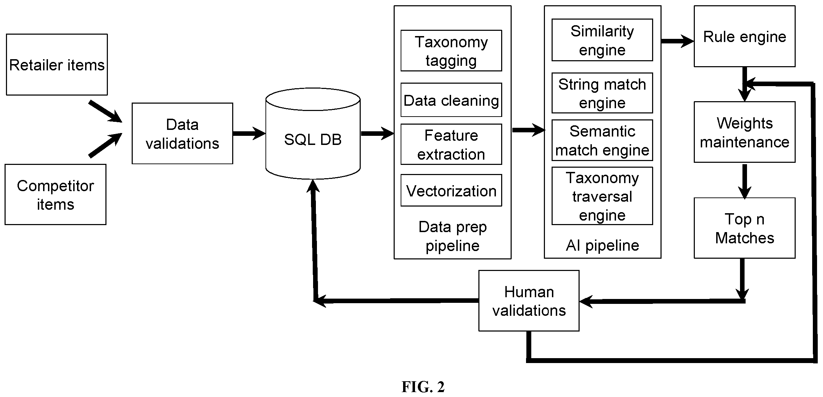

FIG. 2, with reference to FIG. 1, depicts an exemplary high level block diagram of the NLP based system 100 of FIG. 1 for recommendation of items, in accordance with an embodiment of the present disclosure.

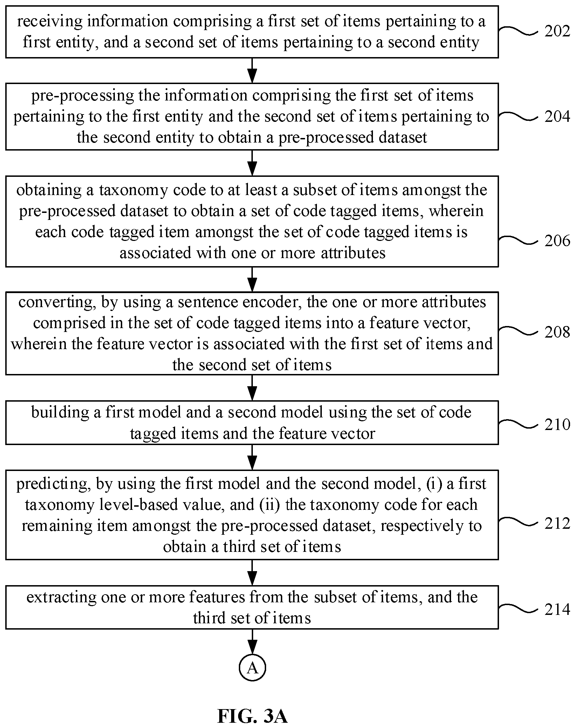

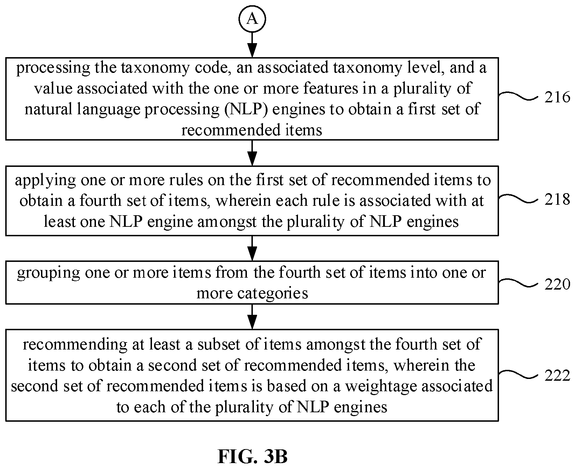

FIGS. 3A and 3B, with reference to FIGS. 1 and 2, depict an exemplary flow chart illustrating a NLP based method for recommendation of items, using the systems 100 of FIGS. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, the block diagram of the system 100 depicted in FIG. 2, and the flow diagram as depicted in FIGS. 3A and 3B. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

At step 202 of the method of the present disclosure, the one or more hardware processors 104 receive information comprising a first set of items pertaining to a first entity, and a second set of items pertaining to a second entity. The items may include but are not limited to products sold/selling/or to be sold by the first entity and the second entity. In an embodiment, the first entity may be a retailer and the second entity may be a competitor (also referred to as a competition). It is to be understood by a person having ordinary skill in the art or person skilled in the art that such examples of items pertaining to products in retail domain shall not be construed as limiting the scope of present disclosure. In other words, the system 100 and the method of the present disclosure may be implemented across industry domains (e.g., manufacturing, healthcare, information technology, and so on), including for services sold/selling/or to be sold by various entities.

The first set of items (e.g., retailer items) and the second set of items (e.g., competitor's items) are fed as an input to the system 100 as depicted in FIG. 2. Such items information may be obtained in the form of metadata, in one example embodiment. Below Table 1 and Table 2 depict the first set of items (e.g., retailer items) and the second set of items (e.g., competitor's items), respectively.

Table 1 (retailer's items)

| GLN | Party nam e | Countr y of origin | descriptionshort | tradeitemmeasurement_ packingunit |
|---|---|---|---|---|
| 405321300011 0 | XYZ LLC | CN | Gamestation | EA |
| 405321300011 0 | XYZ LLC | CN | Gamestation_xshoc k | EA |
| ... | ... | ... | ... | ... |
| 405321300011 0 | XYZ LLC | CN | Tausunkt | EA |

Table 2 (competitor's items)

| GLN | Competitor name | Country of origin | descriptionshort | Store address |
|---|---|---|---|---|
| 2005105007507 | AB C Cor p | USA | X-MEN Active Protect ajÃ¡ndÃ©kc-somag | Location 1 |
| 2005105006613 | AB C Cor p | USA | Green Mojito & Cedarwood ajÃ¡ndÃ©kcsomag vilÃ¡gÃ-tÃ³ cipÅ'fÅ±zÅ'vel | Location 1 |
| ... | ... | ... | ... | ... |
| 2005105007508 | AB C Cor p | USA | X-MEN Men Fresh ajÃ¡ndÃ©kcso-mag | Location 1 |

It is to be understood by a person having ordinary skill in the art or person skilled in the art that such examples of items pertaining to the first entity and the second entity shall not be construed as limiting the scope of present disclosure. It is to be understood by a person having ordinary skill in the art or person skilled in the art that information obtained as in the above tables shall not be construed as limiting the scope of present disclosure. In other words, other details such as ingredients, net content, online activity, purchasing group, validity, supplier identifier, supplier name, and the like may also be obtained. For the sake of brevity only fewer details are shown in the above Tables 1 and 2.

At step 204 of the method of the present disclosure, the one or more hardware processors 104 pre-process the information comprising the first set of items pertaining to the first entity and the second set of items pertaining to the second entity to obtain a pre-processed dataset. Below Tables 3 and 4 depict the pre-processed dataset pertaining to the first entity and the second entity.

Table 3 (pre-processed dataset of first entity)

| item _id | product_na me | Code | brand_ name | variant_bra ndname | brand _type | country_of _origin | aller gen |
|---|---|---|---|---|---|---|---|
| 863 | Primel | 543 564 | Brand 1 | NULL | Private Label | Hungary | NUL L |
| 969 | Salatpflanze n | 676 2 | Brand 2 | NULL | Private Label | Austria | NUL L |
| 105 8 | Kindersnac kgemüse | 543 560 | Brand 3 | NULL | Private Label | Austria | NUL L |
| 105 9 | Fruchtgemü se | 543 560 | Brand 4 | NULL | Private Label | Austria | NUL L |
| 106 0 | Tomatenrari taeten | 543 560 | Brand 5 | NULL | Private Label | Austria | NUL L |
| ... | ... | ... | ... | ... | ... | ... | ... |
| 1374 | Schilcherstur m 1.51 | 9654 | Brand 8 | NULL | Private Label | Austria | Enth ält Sulfi te |

Table 4 (pre-processed dataset of second entity)

| item id | product_na me | GTCo de | brand_n ame | brand_ty pe | country_of_o rigin | allergen |
|---|---|---|---|---|---|---|
| 1 | Mayonnaise 50% Fett 0.5 L | 1568 | Brand 20 | Manufact urer | NULL | Eier und daraus gewonne ne Erzeugni sse, Senf und daraus gewonne ne Erzeugni sse |
| 2 | Leicht Mayonnaise 25% Fett 33 Portionen 0.5 L | 1568 | Brand 21 | Manufact urer | NULL | Eier und daraus gewonne ne Erzeugni sse, Senf und daraus gewonne ne Erzeugni sse |

(continued)

| item id | product_na me | GTCo de | brand_n ame | brand_ty pe | country_of_o rigin | allergen |
|---|---|---|---|---|---|---|
| 3 | Bio-Rapsöl kalt-gepresst 0.5 L | 2126 | Brand 22 | PrivateLa bel | Sorgfältig hergestellt in Deutschland | NULL |
| 4 | Bio-Sonnenblum enöl kaltgepresst 0.5 L | 2126 | Brand 23 | PrivateLa bel | Sorgfältig hergestellt in Österreich | NULL |
| 5 | Darbo Sommersiru p Holunderblii te Minze 0.5 L | 9050 | Brand 24 | Manufact urer | NULL | NULL |
| ... | ... | ... | ... | ... | ... | ... |
| 16 | Elit Elit 0.5 L | 2107 | Brand 29 | Manufact urer | Lettland | NULL |

It is to be understood by a person having ordinary skill in the art or person skilled in the art that items pertaining to the first entity and the second entity for Tables 1, 2, 3, and 4 are shown in different format and details for better understanding of the embodiments described herein and such examples shall not be construed as limiting the scope of present disclosure.

At step 206 of the method of the present disclosure, the one or more hardware processors 104 obtain a taxonomy code (also referred to as 'tc' or 'tcode' and may be interchangeably used herein) to at least a subset of items amongst the pre-processed dataset to obtain a set of code tagged items. In an embodiment, each code tagged item amongst the set of code tagged items is associated with one or more attributes. The taxonomy code is based on at least one of an associated item category and an associated item sub-category. Table 5 depicts items of various categories, and sub-categories at various taxonomy levels (e.g., say L1, L2, L3, ... L7, and so on).

Table 5

| categ ory | subcat egory | L 1 | L 2 | L 3 | L 4 | L5 | L 6 | L 7 | taxono myList | Taxo nomy code | Taxonom yName |
|---|---|---|---|---|---|---|---|---|---|---|---|
| Food, Bever ages & Toba cco | Food Items | 4 1 2 | 42 2 | 43 3 | 0 | 0 | 0 | 0 | [412, 422, 433, 0, 0, 0, 0] | 433 | Nuts & Seeds |
| Food, Bever ages & Toba cco | Food Items | 4 1 2 | 42 2 | 42 7 | 15 68 | 0 | 0 | 0 | [412, 422, 427, 1568, 0, 0, 0] | 1568 | Mayonnai se |
| Healt h & Beaut y | Person al Care | 4 6 9 | 29 15 | 47 3 | 47 4 | 2747 | 0 | 0 | [469, 2915, 473, 474, 2747, 0, 0] | 2747 | Body Wash |
| Food, Bever ages & Toba cco | Food Items | 4 1 2 | 42 2 | 26 60 | 21 26 | 0 | 0 | 0 | [412, 422, 2660, 2126, 0, 0, 0] | 2126 | Cooking Oils |

(continued)

| category | subcategory | L 1 | L 2 | L 3 | L 4 | L5 | L 6 | L 7 | taxonomyList | Taxonomy code | TaxonomyName |
|---|---|---|---|---|---|---|---|---|---|---|---|
| Food, Beverages & Tobacco | Food Items | 4 1 2 | 42 2 | 42 8 | 19 54 | 9503 | 0 | 0 | [412, 422, 428, 1954, 9503, 0, 0] | 9503 | yogurt, fruit |
| ... | ... | ... | ... | ... | ... | ... | ... | ... | ... | ... | ... |
| Food, Beverages & Tobacco | Food Items | 4 1 2 | 42 2 | 42 8 | 42 9 | 3000 2820 | 0 | 0 | [412, 422, 428, 429, 300028 20, 0, 0] | 30002 820 | GRATED |

Table 6

| item_id | product_name | TaxonomyCode | brand_name | brand_type | country_of_origin | competitor_id | product_details | ... | allergens |
|---|---|---|---|---|---|---|---|---|---|
| 1 | Mayonnaise 50% Fett 0.5 L | 1568 | Brand 11 | Manufacturer | NULL | 41 | - mit Freiland-... oder im Glas. | ... | Eier und daraus gewonnene Erzeugnisse, Senf und daraus gewonnene Erzeugnisse |
| ...2 | Leicht Mayonnaise 25% Fett 33 Portionen 0.5 L | 1568 | Brand 12 | Manufacturer | NULL | 41 | macht das ... Eiern | ... | Eier und daraus gewonnene Erzeugnisse, Senf und daraus gewonnene Erzeugnisse |
| 3 | Bio-Rapsöl kalt-gepresst 0.5 L | 2126 | Brand 13 | PrivateLabel | Sorgfältig hergestellt in Deutschland | 41 | Das Bio-Rapsöl ... Salatdressings. | ... | NULL |
| 4 | Bio-Sonnenblumen öl kaltgepresst 0.5 L | 2126 | Brand 14 | PrivateLabel | Sorgfältig hergestellt in Osterreich | 41 | 100% Qualität ... Gemüse. | ... | NULL |
| 5 | Darbo Sommersirup Holunderbliite Minze 0.5 L | 9050 | Brand 15 | Manufacturer | NULL | 41 | ... | ... | NULL |

(continued)

| ite m_ id | produc t_nam e | Taxon omyCo de | bran d_na me | bran d_typ e | country _of_ori gin | comp etitor _id | produc t_detai ls | ... | allerg ens |
|---|---|---|---|---|---|---|---|---|---|
| 7 | Rauch Happy Day Mango Sprizz 0.5 L | 9061 | Brand 16 | Manu factur er | NULL | 41 | NULL | ... | NULL |
| 11 | Green Tea with Honey 0.5 L | 300012 97 | Brand 17 | Manu factur er | NULL | 41 | NULL | ... | NULL |
| 14 | Mautne r Markh of Hesperi den Essig 0.5 L | 2140 | Brand 18 | Manu factur er | O sterrei ch | 41 | Hesper iden Essig ist eine... len. | ... | Schwe feldiox id und Sulphi te |
| 15 | Doppel herz aktiv Eisen Vital fliissig 0.5 L | 525 | Brand 19 | Manu factur er | NULL | 41 | Eisen ist ein ... werden. | ... | NULL |

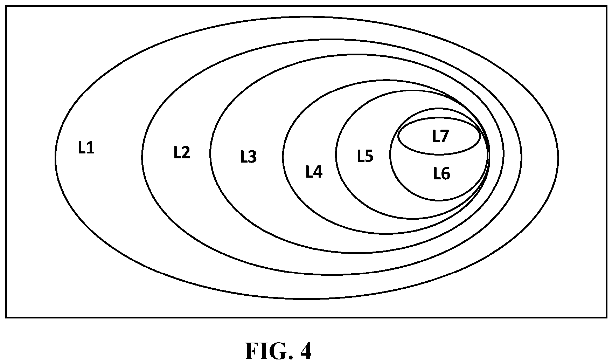

FIG. 4, with reference to FIGS. 1 through 3B, depicts an exemplary merchandise taxonomy, in accordance with an embodiment of the present disclosure. Every item is tagged with the merchandise taxonomy code from levels L1 through L7 based on the applicability. Some items can have codes tagged to all 7 levels and some may have just (m-n) levels also. The leaf node represents the taxonomy code to start the item matching. The relationship among levels is shown below:

$$L7 \subseteq L6 \subseteq L5 \subseteq L4 \subseteq L3 \subseteq L2 \subseteq L1$$

At step 208 of the method of the present disclosure, the one or more hardware processors 104 convert, by using a sentence encoder, the one or more attributes comprised in the set of code tagged items into a feature vector. The feature vector is associated with the first set of items and the second set of items. Below Table 7 and Table 8 depict conversion of attributes into a feature vector for both the first entity and the second entity, respectively.

Table 7 (item of first entity after vectorization - feature vector)

| s e ller I d | i t e m I d | L 1 | Taxon omyC o d e | br an d N a m e | additio nalStri ng | fe at ur eS tri ng | br ea de ru m bs | u ni t N a m e | u ni t M ea su re | b i o fl a g | de an Fea tur eSt rin g | clea nAd diti onal Stri ng | cle an Be Str ing | cle an As Be Str ing | feat ure Vect or |
|---|---|---|---|---|---|---|---|---|---|---|---|---|---|---|---|
| 4 1 | 1 0 5 4 7 | 4 1 2 | 9 1 2 0 | | https:// www.i nter. at/ shop/le bensmi ttel/-lachs-filets- mit-zitrone n-pfeffer-marina de-2- stueck-250g- packun g/p/202 000333 1350 | la ch s-fil ets mi t zit ro ne n- pf eff er-... pa ck un g 25 0 g | sta rts eit e > pr od uk te > tie fk üh lu ng > fle isc h, fis ch & m ee re sfr üc ht e > ... pa ck un g 25 0 g | g | 25 0 | 0 | lac hs filet s zitr one n pfef fer mar ina de stüc k pac kun g | lebe nsm ittel lach s filet s mit zitro nen pfef fer mari nad e stue ck pac kun g | tief küh lun gfl eis ch fisc h me ere sfr üch tefi sch | tief küh lun gfl eis ch fisc h me ere sfr üch tefi sch leb ens mit tel lac hs file ts mit zitr one n pfe ffer ma rin ade stu eck pac kun g | [-0.07 2857 8716 5164 948, 0.00 7462 8968 7231 1830 5, - 0.07 7256 6795 3491 211, 0.03 2168 3697 4024 7726 - , 0.02 8163 8745 2185 154, 0.00 0162 3821 0082 5198 ] |

EP 4 589 468 A1

Table 8 (item of second entity after vectorization - feature vector)

| sellerId | itemId | L1 | TaxonomyCode | brandName | additionalString | featureString | breaderumbs | unitName | unitMeasure | bio-flag | deanFeatureString | cleanAdditionalString | deanBeString | cleanAsBeString | featureVector |
|---|---|---|---|---|---|---|---|---|---|---|---|---|---|---|---|
| 41 | 10547 | 412 | 9120 | | https://www.inter.at/shop/lebensmittel/-lachs-filets-mit-zitronen-pfef-fer-marinade-2-stueck-250g-pack-ung/p/2020003331350 | lachs-filets mit ... marinade ... pack ung 250 g | startseite > produkte ... 2 stück 250g pack ung 250 g | | g | 250 | 0 | lachs file ts zitronen pfeffer marina de stück pack kung | lebensmittel lachs filets mit zitronen pfeffer marinade stueck pack kung | tiefkühlungfleisch fischmeeresfrüchtefisch | tiefkühlungfleisch fisch ... file ts mit ... stueck pack kung | [-0.072857871651 64948, 0.0074628968 72311830 5, -0.0772566795 3491211, 0.0016238210082 5198] |

EP 4 589 468 A1

At step 210 of the method of the present disclosure, the one or more hardware processors 104 build a first model and a second model using the set of code tagged items and the feature vector. The first model may also be referred to as 'level 1 classifier model or L1 classifier model and may be interchangeably used herein. The second model may also be referred to as 'taxonomy classifier model' and may be interchangeably used herein. At step 212 of the method of the present disclosure, the one or more hardware processors 104 predict, by using the first model and the second model, (i) a first taxonomy level-based value, and (ii) the taxonomy code for each remaining item amongst the pre-processed dataset, respectively to obtain a third set of items. Below Table 9 depicts the first model and the second model built and prediction of (i) the first taxonomy level-based value, and (ii) the taxonomy code, respectively (e.g., refer columns 3 and 4).

Table 9

| seller Id | item Id | L1 | Taxnomon yCode | brand Name | additio nalStri ng | feat ureS tri ng | breaderum bs | unit Name | unit Mea sure | bio fla g | clean Featur eStrin g | cleanAddit ionalString | clean Be String | clean As Be String | feature Vector |
|---|---|---|---|---|---|---|---|---|---|---|---|---|---|---|---|
| 4 | 345 | 412 | 30 00 28 20 | milf ina | dairy käse & käseers atzprod ukte käse geriebe n & zerklei nert | e m m en tal er ge rie be n 25 0g | NONE | g | 250 | 0 | em me ntal er geri ebe n | dair y käse käse ersa tzpr odu kte geri ebe n zerk lein ert | dai ry käs e käs eer sat zpr od ukt e ger ieb en zer kle ine rt | dai ry käs e käs eer sat zpr od ukt e ger ieb en zer kle ine rt em me nta ler | [-0.00 2662 1697 4705 4577 , 0.05 3706 2846 1241 722, 0.04 6528 6672 1153 259, 0.07 1898 7807 6314 926, 0.04 0815 9419 8942 1844 ] |
| 41 | 10547 | 412 | 9120 | | https:// www.i nter. at/ shop/le bensmi ttel/- lachs-filets-mit-zi- trone n-pfeffer-mari- na de-2- stueck-250g-packun g/p/202 000333 1350 | la ch s-fil et s mi t zit ro ne n-pf ef fe r-m ari na de 2 st üc k 25 0g pa ck un g 25 0 g | st art se ite > pr od uk te > tie fk üh lu ng ... 2 st üc k 250 g pa ck un g 25 0 g | g | 250 | 0 | lac hs file ts zitr one n pfe ffer mar ina de stü ck pac kun g | lebe nsm ittel lach s filet s mit zitr one n pfef fer mar inad e stue ck pac kun g | tief kü hlu ngf leis ch fisc h me ere sfr üch tefi sch | tief kü hlu ngf leis ch fisc h me ere sfr üch tefi sch leb ens mit tel lac hs file ts mit zitr one n pfe ffer ma rin ade stu eck pac ku ng | [-0.07 2857 8716 5164 948, 0.00 7462 8968 7231 1830 5, - 0.07 7256 6795 3491 211, 0.03 2168 3697 4024 7726 - , 0.02 8163 8745 2185 154, 0.00 0162 3821 0082 5198 ] |

At step 214 of the method of the present disclosure, the one or more hardware processors 104 extract one or more features from the subset of items, and the third set of items. In feature extraction, one or more attributes associated with the subset of items, and the third set of items are concatenated to obtain a concatenated string (e.g., information from each column from below Table 10 is concatenated to obtain the concatenated string). Then keywords from a customized dictionary stored in database 108 are checked for its presence in the concatenated string for feature extraction. The matching keywords serve as the features that are extracted from the from the subset of items, and the third set of items. The customized database comprises various keywords pertaining to items information and is built with the help of domain expert or subject matter expert. The customized database may be periodically updated with new keywords based on the incoming data or requests for providing item recommendation. A predefined attribute value for each taxonomy code of the subset of items, and the third set of items is then obtained. A comparison of keywords between the subset of items, and the third set of items is then performed. The one or more features are then extracted from the subset of items, and the third set of items based on the comparison and the predefined attribute value. Below Table 10 depicts item details for which feature extraction is performed.

Table 10

| item_id | product_name | GTCode | feature_summary | brand_name | brand_type | country_of_origin | competitor_id | breadcrumbs | product_details | Ingredients | allergens |
|---|---|---|---|---|---|---|---|---|---|---|---|
| 1 | Mayonnaise 50% Fett 0.5 L | 15 68 | null | | Manufacturer | NUL L | 41 | Startseite > Produkte > Vorratsschrank > Grundnahrungsmittel > Ketchup & Mayonnaise > Mayonnaise 50% Fett 0,5 L | - mit Freiland-Eiern macht das Beste aus Ihren Gerichten ! Entdecken Sie unsere Produkte voiler Geschmack und ... Tube, im Beutel oder im Glas. | 49% Sonnenblumenöl, Trinkwasser, 4,6% EIGELB2, Glukosesirup, Weingeistessig, Weißweinessig, modifizierte ... allergene Inhaltsstoffe. | Eier und daraus gewonne ne Erzeugnisse, Senf und daraus gewonne ne Erzeugnisse |

Table 11 depicts the various attributes (penultimate column) and attribute value (last column) for taxonomy code 1658 by way of examples:

Table 11

| Taxonomycode | segmenttitle | brick code | bricktitle | attributetitle | AttributeValue_split_Ge |
|---|---|---|---|---|---|
| 1568 | FoodBeverage/Tobacco | 1000 6317 | Mayonnaise/ Mayonnaise Substitutes (Frozen) | Level of Fat Claim | fett |

(continued)

| Taxonomycode | segmenttitle | brickcode | bricktitle | attributetitle | AttributeValue_split_Ge |
|---|---|---|---|---|---|
| 1568 | FoodBeverage/Tobacco | 1000<br><br>6317 | Mayonnaise/ Mayonnaise Substitutes (Frozen) | Level of Fat Claim | frei |
| 1568 | Food/Beverage/Tobacco | 1000<br><br>6317 | Mayonnaise/ Mayonnaise Substitutes (Frozen) | Type of Mayonnaise/ Mayonnaise Substitute | creme |
| ... | ... | ... | ... | ... | ... |
| 1568 | FoodBeverage/Tobacco | 1000<br><br>6319 | Mayonnaise/ Mayonnaise Substitutes (Shelf Stable) | Type of Mayonnaise/- Mayonnaise Substitute | salat |

From the above Tables 10 and 11, a matching for the common keywords between the items is obtained by combining all attributes of the item(s) and a corpus is obtained as depicted in below Table 12.

Table 12

[ Mayonnaise 50% Fett 0.5 L,,Startseite > Produkte > Vorratsschrank > Grundnahrungsmittel > Ketchup & Mayonnaise > Mayonnaise 50% Fett 0,5 L, - mit Freiland-Eiern macht das Beste aus Ihren Gerichten! Entdecken Sie unsere Produkte - voller Geschmack und aus hochwertigen Zutaten gemacht: Mit nur 50% Fettgehalt ist Fein Mayonnaise die leichte Mayonnaise-Variante. Mit ihr lassen sich schmackhafte und sehr feine Salatkreationen zaubern. Unsere feine Mayonnaise gibt es in der praktischen Tube, im Beutel oder im Glas, 49% Sonnenblumenöl, Trinkwasser, 4,6% EIGELB[2], Glukosesirup, Weingeistessig, Weißweinessig, modifizierte Stärke, Zucker, Speisesalz, SENFSAAT, Gewürze, Zuckersirup, Konservierungsstoff: Kaliumsorbat, Säuerungsmittel: Citronensäure, Aromen, Farbstoff: Carotin. [2]von Eiern aus Freilandhaltung. In Großbuchstaben angegebene Zutaten enthalten allergene Inhaltsstoffe., Eier und daraus gewonnene Erzeugnisse, Senf und daraus gewonnene Erzeugnisse]

Using matching keywords from the above Table 12, features are extracted as shown in below Table 13.

Table 13

{'Level of Fat Claim': ['fett', 'frei'], 'Type of Mayonnaise/Mayonnaise Substitute': ['mayonnaise', 'salat']}

At step 216 of the method of the present disclosure, the one or more hardware processors 104 process the taxonomy code, an associated taxonomy level, and a value associated with the one or more features in the plurality of natural language processing (NLP) engines to obtain a first set of recommended items. Since system 100 utilizes a series of NLP engines as depicted in FIG. 2, the outputs from the steps performed by each of these NLP engines (also referred to as artificial intelligence (AI) models) may be referred to as artificial intelligence (AI)-based output. In other words, the entire operations carried out by the NLP engines may be referred to as an AI pipeline to process the taxonomy code, an associated taxonomy level, and a value associated with the one or more features and intelligently obtain the first set of recommended items. The outputs from each NLP engine when put together form the first set of recommended items. For instance, the first set of recommended items may comprise a first subset of recommended items by a first NLP engine, a second subset of recommended items by a second NLP engine, a third subset of recommended items by a third NLP engine, and a fourth subset of recommended items from a fourth NLP engine. The step of processing by the first NLP engine (e.g., say similarity engine) amongst the plurality of NLP engines comprises filtering the second set of items for each item comprised in the first set of items based on the taxonomy code. A feature summary for the first set of items and the second set of items is then created based on the value of the one or more features. The feature summary is then converted into the feature vector of the first set of items and the second set of items. A cosine similarity score is computed for the first set of items and the second set of items based on the feature vector of the first set of items and the second set of items. Then the first NLP engine recommends at least a few items (e.g., the first subset of recommended items) amongst the first set of recommended items based on the cosine similarity score. The above step of processing to obtain the first set of recommended items based on the cosine similarity score by the first NLP engine (e.g., NLP engine 1) is better understood by way of following description. Table 14 depicts retailer's items.

Table 14

| retailer_item_id | product_name | Taxon_omyCode | feature_summary | country_of_origin | sg_categorydescription | sg_commodifygroupdescription | sg_subcommoditygroupdescription | packaging_description | ingredientstatement | allergenstatement |
|---|---|---|---|---|---|---|---|---|---|---|
| 345 | Emmenr ieben 25 0g | 300 028 20 | {'Consumer Life stage': ['alle'], 'Formation': ['block', 'gerieben'],..,-'If in Sauce': ['NONE']} | NULL | Dairy | Kse & Kseersatzprodukte | Kse gerieben & zerkleinert | Schlauchb eutelf olie OPA/ PE/1 5/50 | MILCH, Stärke, Salz, Milchsäurebakterien kulturen, Pro-pionsäure bakterien, Lab | NULL |

Similarly, Table 15 depicts the second set of items (competitor's items).

Table 15

| comp etitor item _id | produe t_n ame | Tax ono myc ode | featu re_s umm ary | coun try_o f_ori gin | bre adc ru mb s | prod uct_d escrip tion | pdp_url | aller gens | ingr edie nts |
|---|---|---|---|---|---|---|---|---|---|
| 7903 | Sch ärdi nger Ber gkäs e geri ebe n 200 G | 300 028 20 | {'Co nsum er Lifes tage': ['alle' 11 'For mati on': ['geri eben'],- ... 'If in Sauc e': ['NO NE'] } | Öster reich | Star tseit e > Pro duk te > Kü hire gal > Käs e > Käs e geri ebe n > Sch ärdi nge r Ber gkä se geri ebe n 200 G | Der wiirzi g kräfti ge Bergk äse gerieb en eignet sich ideal zum überb acken von herzh afte Speis en. | https://www.in ter.at/shop/lebe nsmittel/schaer dinger-bergka- ese-gerie- ben/p/202 0002527945 | Mile h und dara us gew onne ne Erze ugni sse (inkl Lakt ose) | MIL CH, Mai sstär ke, Salz , Lab, Käs erei kult uren . In Gro ßbuc hsta ben ange gebe ne Zuta ten enth alten aller gene Inha ltsst offe. |
| 2851 77 | bed da Gra nve gan o zum Rei ben 150 g Pac kun g | 300 028 20 | {'Co nsum er Lifes tage': ['alte r'], ... Sauc e': ['NO NE'] } | Deut schla nd | All e Kat ego rien > Kü hlw are n > Käs e, Auf stri che & Sal ate > Par mes an & Rei bkä se | bedda Granv egano ist eine lecker e vegan e ... Würz en von frisch en Salate n. | https://shop.bil la. at/produkte/ bedda-granve- gano-zum-rei- ben-00596299 | NUL L | mod ifizi erte Stär ke, Was ser, Kok osöl (24 %), Mee rsalz , Säur ereg ulat or: Calc ium citra t, Aro ma, Oliv enex trakt , Reis prot ein. |
| 2755 7 | Sch ärdi nger Em men taler Geri ebe n 200 g Pac | 300 028 20 | {'Co nsum er Lifes tage': ['NO NE'], ... Sauc e': ['NO NE'] } | Öster reich | All e Kat ego rien > Kü hlw are n > Käs e, Auf stri che & Sal ate > Par mes an & Rei bkä se | Es muss mal wiede r schnel gehen ? aber auch perfek t für Pasta. | https://shop.bil la.at/produkte/s chaerdinger- emmentaler- gerieben-00421626 | Enth alt - Ist im Prod ukt enth alten Mile h und Mile herz eugn isse | Zuta ten: MIL CH, Mai sstär ke, Salz , Lab, Käs erei kult uren |
| ... | ... | ... | ... | ... | ... | ... | ... | ... | ... |

(continued)

| comp etitor item _id | pro due t_n ame | Tax ono myc ode | featu re_s umm ary | coun try_o f_ori gin | bre adc ru mb s | prod uct_d escrip tion | pdp_url | aller gens | ingr edie nts |
|---|---|---|---|---|---|---|---|---|---|
| 6018 26 | Perf ect Itali ano Grat ed Che ese Perf ect Bak es \| 250 g | 300 028 20 | {'Co nsum er Lifes tage': ['NO NE'], ... 'If in Sauc e': ['NO NE'] } | NUL L | Dai ry, Egg s & Frid ge > Che ese > Gra ted Che ese | Perfec t Italian o Chees e Perfec t Bakes Grate d 250g3 Chees es for a crisp, golde n crust | https://www.co les. com. au/pro duct/perfect-ita-liano-grated-cheese-perfect-ba-kes-250-g-3274024 | Cont ains Milk | Che ese (Mil k, Salt, Cult ures, Enz yme ), Anti caki ng Age nt (460 ), Pres erva tive (200 ). |

Using Tables 14 and 15, top 'x' items are recommended by the first engine as depicted in Table 16 below by way of examples:

Table 16

| retailer_ item_id | competito r_item_id | retailer_it em_name | competitor_i tem_name | aisc ore | retailer _tcode | competit or_tcode |
|---|---|---|---|---|---|---|
| 345 | 10574 | Emmentale r gerieben 250g | Emmentaler gerieben 250 G | 0.87 5331 | 300028 20 | 30002820 |
| 345 | 10019 | Emmentale r gerieben 250g | Pizza-Käse gerieben. leicht* 250 G | 0.86 802 | 300028 20 | 30002820 |
| 345 | 7952 | Emmentale r gerieben 250g | Schärdinger Gratinkäse 200 G | 0.86 0829 | 300028 20 | 30002820 |
| 345 | 8885 | Emmentale r gerieben 250g | Cheddar rot gerieben 200 G | 0.86 0282 | 300028 20 | 30002820 |

The cosine similarity score as computed by the first NLP engine is shown in the above Table 16 in the 'aiscore column' for specific item. In the present disclosure, the cosine similarity score is computed by way of following description. Given two n-dimensional vectors of attributes, A and B, the cosine similarity, cos(θ), is represented using a dot product and magnitude as:

$$\frac{\sum_{i=1}^{n} AiBi}{\sqrt{\sum_{i=1}^{n} Ai^2} \; \sqrt{\sum_{i=1}^{n} Bi^2}}$$

where *Ai* and *Bi* are the ith components of vectors {A} and {B}, respectively. And cosine matching score CMS is in range [0,1],

Similarly, the step of processing by the second NLP engine (e.g., say taxonomy traversal engine) amongst the plurality of NLP engines is performed. More specifically, for each taxonomy code, the system 100 traverses through the associated taxonomy level for determining a match between an item of the first set of items and an item of the second set of items to obtain a set of level-based items. Further, one or more attributes of the set of level-based items are concatenated to obtain a set of concatenated attributes. The set of concatenated attributes are converted into the feature vector of the first set of items and the second set of items. Further, a cosine distance score between the first set of items and the second set of items based on the feature vector of the first set of items and the second set of items. A taxonomy based matching score is then computed based on the cosine distance score to obtain at least fewer items for recommendation (e.g., the second subset of recommended items). In other words, the first set of recommended items are obtained based on the taxonomy based matching score. The above step of processing to obtain the first set of recommended items based on the taxonomy based matching score by the second NLP engine (e.g., NLP engine 2) is better understood by way of following description. Table 17 depicts retailer's items by way of examples:

Table 17

| retailer_item_id | product_name | TaxonomyCode | feature_summary | country_of_origin | sg_categorydescription | sg_commoditygroupdescription | sg_subcommoditygroupdescription | packaging_description | ingredientstatement | allergenstatement |
|---|---|---|---|---|---|---|---|---|---|---|
| 345 | Emmentaler rieben 250g | 300 028 20 | {'Consumer Life stage': ['alle'], ... ['NONE']} | NULL | Dairy | Kse & Kseersatzprodukte | Kse gerieben & zerkleinert | Schlauchbeutelf olie OPA/PE/15/50 | MILCH, Stärke, Salz, Milchsäurebakterien kulturen, Pro-pionsäure bakterien, Lab | NULL |

Similarly, Table 18 depicts the second set of items (competitor's items).

Table 18

| competitor_item_id | product_name | Taxonomycode | feature_summary | country_of_origin | breadcrumbs | product_description | pdp_url | allergens | ingredients |
|---|---|---|---|---|---|---|---|---|---|
| 350694 | Mccain Superfries Straight Cut | 9043 | {'If Extruded' : ... Snack': ['chips']} | NULL | Specials> Low Price | NULL | https://www.woolworths.com.au/shop/productdetails/662933/mccain-superfries-straight-cut | NULL | NULL |
| 351426 | Dairyworks Grated 3 Cheese Mix | 300 028 20 | {'Consumer Lifestage': ... ['NONE'] } | NULL | Specials> Prices Dropped | NULL | https://www.woolworths.com.au/shop/productdetails/681853/dairyworks-grated-3-cheese-mix | NULL | NULL |

21

(continued)

| comp etitor _item _id | pro due t_n am e | Tax ono myc ode | featu re_s um mar y | coun try_ of_o rigin | bre adc ru mb s | prod uct_d escri ption | pdp_url | all er ge ns | ing re die nts |
|---|---|---|---|---|---|---|---|---|---|
| 3508 83 | Perf ect Itali ano Gra ted Mo zzar ella | 300 028 20 | {'Co nsum er Lifes tage': ... ['NO NE'] } | NUL L | Dai ry, Egg s & Fri dge > Che ese | NUL L | https://www.woolwo rths. com.au/shop/pr oductdetails/66922/p erfect-italiano-grated-mozzarella | N U L L | N UL L |
| ... | ... | ... | ... | ... | ... | ... | ... | ... | ... |
| 3506 93 | Mc cain Sup erfri es Stea k Cut | 904 3 | {'If Extr uded' : ... Snac k': ['chi ps']} | NUL L | Spe cial s> Lo w Pric e | NUL L | https://www.woolwo rths.com.au/shop/pr oductdetails/662932/ mccain-superfries-steak-cut | N U L L | N UL L |

Using Tables 17 and 18, taxonomy level-based items are obtained in Table 19 by way of examples:

Table 19

| category | subcat egory | L 1 | L 2 | L 3 | L 4 | L5 | L 6 | L 7 | Taxono myList | Tcode (taxo nomy code) | Taxonom dyName |
|---|---|---|---|---|---|---|---|---|---|---|---|
| Food, Bever ages & Toba cco | Food Items | 4 1 2 | 4 2 2 | 4 2 8 | 4 2 9 | 3000 2820 | 0 | 0 | [412, 422, 428, 429, 3000282 0, 0, 0] | 30002 820 | GRATED |

Attributes from the above Table 19 are then concatenated and converted into feature vector for the first entity and the second entity as depicted in Tables 20 and 21, respectively. More specifically, Table 20 depicts feature vector of the first set of items pertaining to the first entity, and Table 21 depicts feature vector of the second set of items pertaining to the second entity.

Table 20

| sellerId | itemId | L1 | TaxonomyCode | brandName | additionalString | featureString | breadcrumbs | unitName | unitMeasure | bioflag | cleanFeatureString | cleanAdditionalString | cleanBcString | cleanAsBcString | featureVector |
|---|---|---|---|---|---|---|---|---|---|---|---|---|---|---|---|
| 4 | 345 | 412 | 30 0028 20 | milfina | dairy käse & käse ersatz produkte käse ... & zerkleinert | emmentaler gerieben 250g | NONE | g | 250 | 0 | emmentaler gerieben | dairy käse käse ersatzprodukte gerieben zerkleinert | dairy käse ersatz produkte gerieben zerkleinert | dairy käse ersatz produkte ... emmentaler | [-0.002662 16974705 4577 , ... 0.0408159419 8942 1844 ] |

Table 21

| seller Id | item Id | L1 | Taxonomy Code | brand Name | additional String | feature String | breaderumbs | unit Name | unit Measure | bio flag | clean Feature String | clean Additional String | clean Be String | clean As Be String | feature Vector |
|---|---|---|---|---|---|---|---|---|---|---|---|---|---|---|---|
| 41 | 10547 | 412 | 9120 | | https://www.inter.at/shop/lebensmittel/-lachs-filets-mit-zitrone n-pfeffer-marina de-2-stueck-250g-packun g/p/202 000333 1350 | la ch s-fil ets mi t zit ro ne n-pf eff er-... 25 0 g | sta rts eit e > pr od uk te > tie fk üh lu ng > fle isc h, ... 25 0 g | g | 25 0 | 0 | lac hs file ts zitr one n pfe ffer mar ina de stü ck pac kun g | lebe nsm ittel lach s filet s mit zitro nen pfef fer mari nad e stue ck pac kun g | tief kü hlu ngf leis ch fisc h me ere sfr üch tefi sch | tief kü hlu ngf leis ch fisc h me ere sfr üch tefi sch ... stu eck pac ku ng | [-0.07 285 787 165 164 948, ..., - ... 0.02 816 387 452 185 154, 0.00 016 238 210 082 519 8] |

Using the feature vectors from Table 20 and Table 21, a cosine distance score between the first set of items and the second set of items is computed based on which a taxonomy based matching score is computed. The taxonomy based matching score is computed by way of following description. The item1 and item2 are represented as vectors Ai and *Bi* respectively. The matching score TMS is derived as follows:

$$\left(1 - \frac{Ai.Bi}{||Ai||_2 ||B||_2}\right.$$

Then, at least fewer items amongst the first set of recommended items are obtained based on the taxonomy based matching score. The recommended items with taxonomy based matching score (e.g., refer 3rd column in below Table 22) are depicted in Table 22 below:

Table 22

| retailer_item_n ame | competitor_item_n ame | Aiscore (taxono my based matchin g score) | retailer_tc ode | competitor_tc ode |
|---|---|---|---|---|
| Emmentaler gerieben 250g | Emmentaler gerieben 250 G | 0.875331 | 30002820 | 30002820 |
| Emmentaler gerieben 250g | Fallini Käse gerieben 40 G | 0.748203 | 30002820 | 30002820 |
| Emmentaler gerieben 250g | Bergbauern-Emmentaler in Scheiben 200 G | 0.737946 | 30002820 | 30002837 |
| Emmentaler gerieben 250g | bedda veganer Käseersatz | 0.710421 | 30002820 | 9113 |

Similarly, the step of processing by the third NLP engine (e.g., say semantic engine) amongst the plurality of NLP engines is performed. More specifically, an index of the second set of items is created. A semantic match for a query item associated with the first set of items is identified in the index of the second set of items. A semantic matching score is then computed based on the semantic match. In other words, semantic matching for the given retailer item name is searched in the index of the competitor items, and the Euclidean distance is computed between the query item and the item in the index which forms the semantic matching score.

The above step of computing the semantic matching score and obtaining at least fewer items (e.g., the third subset of recommended items) amongst the first set of recommended items based on the semantic matching score is better understood by way of following description. Table 23 depicts the first set of items pertaining to the first entity (e.g., the retailer items).

Table 23

| ret aile r_it em _id | pr od uct _n am e | Ta xon om yC ode | feat ure _su mm ary | cou ntry _of_ orig in | sg_ca tegor ydesc ripti on | sg_com modify groupd escripti on | sg_subc ommodi tygroup descript ion | pack agin g_de scrip tion | ingred ientst ateme nt | alle rge nsta tem ent |
|---|---|---|---|---|---|---|---|---|---|---|
| 345 | Em me nta ler ger ieb en 25 0g | 300 028 20 | {'C ons ume r Life stag e': ['all e'], .. ['N ON E']} | NU LL | Dairy | Kse & Kseersa tzprodu kte | Kse gerieben & zerklein ert | Schla uchb eutelf olie OPA/ PE/1 5/50 | MILC H, Stärke, Salz, Milchs äureba kterien kultur en, Propio nsäure bakteri en, Lab | NU LL |

For the sake of brevity, Table for the second set of items pertaining to the second entity (e.g., the competitor items) is not shown.

However, using both the Table 23 and competitor items (not shown), the semantic matching score is computed. First, Faiss IndexFlatL2 index is run, wherein this index is built for a set of items which need to be searched. This index is referred to as the query item. The Euclidean distance (in Euclidean space - the vectors of item1 and item2 are denoted by $qi$ and $pi$) between the query item and the item in the index which forms the score is derived as follows.

$$\sqrt{\sum_{i=1}^{n}(qi-pi)^2}$$

Semantic matching based score $\varepsilon$ [0,1]. Below Table 24 depicts at least fewer items amongst the first set of recommended items that are obtained based on the semantic matching score. The recommended items with semantic matching score (e.g., refer 5th column in below Table 24) are depicted in Table 24 below:

Table 24

| retailer_item_id | competitor_item_id | retailer_item_name | competitor_item_name | Aisc ore (semantic mate hing score ) | retailer_tcode | competitor_tcode |
|---|---|---|---|---|---|---|
| 345 | 3872 | Emmentale r gerieben 250g | SalzburgMil ch Emmentaler Scheiben 1 KG | 0.796 7 | 300028 20 | 30001237 |
| 345 | 5011 | Emmentale r gerieben 250g | Emmentaler in Scheiben 1KG | 0.796 7 | 300028 20 | 30001237 |
| 345 | 9193 | Emmentale r gerieben 250g | Philadelphia mit Milka 175 G | 0.755 447 | 300028 20 | 5785 |
| 345 | 8404 | Emmentale r gerieben 250g | NÖM NÖM Cottage Cheese natur 200 G | 0.754 907 | 300028 20 | 5785 |
| 345 | 10574 | Emmentale r gerieben 250g | Emmentaler gerieben 250 G | 0.875 331 | 300028 20 | 30002820 |

Similarly, the step of processing by the fourth NLP engine (e.g., say string match engine) amongst the plurality of NLP engines is performed. More specifically, a comparison of a name associated with each item amongst the first of items with each item amongst the second of items is performed and a string matching score is computed based on the comparison.

For the sake of brevity items of first entity and the second entity are not shown. However, in the present disclosure, the system 100 considered Table 23 which consisted of first set of items of the first entity (e.g., retailer's items) for string matching score computation. Similarly, the second set of items of the second entity (e.g., the competitor's item) are not shown but can be realized in practice. Item names of given retailer item are matched with competitor item, wherein CC = length of the longest common character set among the two item strings. This can happen to many substrings say n, wherein higher the string matching score (SMS) value the greater is the likelihood of similarity between the items, wherein string matching score SMS [0,1]. For instance, given two item strings item Retailer (item 1) and item Competitor (item 2) the matching score that denotes the extent of similarity had been derived using the following formula:

$$\text{SMS} = (2 * \textstyle\sum_{i=1}^{n} CC) / (|\text{item1}| + |\text{item2}|)$$

where SMS $\varepsilon$ [0,1]

Based on the above score computation, at least fewer items (e.g., the fourth subset of recommended items) amongst the first set of recommended items that are obtained based on the string matching score. The recommended items with string matching score (e.g., refer 5th column in below Table 25) are depicted in Table 25 below:

Table 25

| retailer_item_id | competitor_item_id | retailer_item_name | competitor_item_name | Aisc ore (string mate hing scor e) | retailer_tcode | competitor_tcode |
|---|---|---|---|---|---|---|
| 345 | 10574 | Emmentaler gerieben 250g | Emmentaler gerieben 250 G | 0.87 5331 | 300028 20 | 30002820 |
| 345 | 240055 | Emmentaler gerieben 250g | Emmentaler in Scheiben 400 G | 0.84 2105 | 300028 20 | 30001237 |
| 345 | 3872 | Emmentaler gerieben 250g | SalzburgMilc h Emmentaler Scheiben 1 KG | 0.79 67 | 300028 20 | 30001237 |
| 345 | 5011 | Emmentaler gerieben 250g | Emmentaler in Scheiben 1 KG | 0.79 67 | 300028 20 | 30001237 |
| 345 | 7608 | Emmentaler gerieben 250g | Schärdinger Emmentaler geräuchert in Scheiben 150g 150 G | 0.73 4694 | 300028 20 | 30001237 |

Once the first set of recommended items are obtained as shown above, one or more rules on the first set of recommended items to obtain a fourth set of items at step 218. Each rule is associated with at least one NLP engine amongst the plurality of NLP engines. Below Table 26 depicts illustrative rules applied on the first set of recommended items to obtain the fourth set of items.

Table 26

| Rule | Rule description |
|---|---|
| 1 | Country of origin should match |
| 2 | Ingredient such as Fat content, Sugar, Salt should match |
| 3 | Allergen value - Gluten free should match |
| 4 | Organic product should be compared with only Organic products |
| 5 | Manufacturer brand should be compared with Manufacturer brand e.g. Coca cola with coca cola |
| 6 | Grammages content should be comparable with (+/-) 50% range e.g. 500 gm product can be compared with max. 750 gm or 250 gm for potential match |

It is to be understood by a person having ordinary skill in the art or person skilled in the art that the above rules are representative and such rules shall not be construed as limiting the scope of the present disclosure. Further, at step 220 of the method of the present disclosure, the one or more hardware processors 104 group one or more items from the fourth set of items into one or more categories, and at least a subset of items amongst the fourth set of items are recommended to obtain a second set of recommended items at step 222. The second set of recommended items is based on a weightage associated to each of the plurality of NLP engines, in one embodiment of the present disclosure.

Table 27 depicts the second set of recommended items that are categorized into various categories by the NLP engines.

Table 27

| retailer_item_id | competitor_item_id | retailer_item_name | competitor_item_name | retailer_tcode | competitor_tcode | bucket |
|---|---|---|---|---|---|---|
| 345 | 10574 | Emmen gerie-ben 250g | Emmentaler gerieben 250 G | 300028 20 | 30002820 | 1 |
| 345 | 5011 | Emmen gerieben 250g | Emmentaler in Scheiben 1 KG | 300028 20 | 30001237 | 3 |
| 345 | 10019 | Emmen gerieben 250g | Pizza-Käse gerieben. leicht* 250 G | 300028 20 | 30002820 | 4 |
| 345 | 7952 | Emmen gerieben 250g | Schärdinger Gratinkäse 200 G | 300028 20 | 30002820 | 4 |
| 345 | 8885 | Emmen gerieben 250g | Cheddar rot gerieben 200 G | 300028 20 | 30002820 | 4 |
| 345 | 240055 | Emmen gerieben 250g | Emmentaler in Scheiben 400 G | 300028 20 | 30001237 | 4 |
| 345 | 7953 | Emmen gerie-ben 250g | Schärdinger Spätzle-käse 200 G | 300028 20 | 30002820 | 4 |
| 345 | 3872 | Emmen gerie-ben 250g | SalzburgMilc h Emmen-taler Scheiben 1 KG | 300028 20 | 30001237 | 3 |

In the above table 27, the bucketing is referred to as grouping of items into various categories. For instance, items are grouped into a first category based on an item comprised in the first set of recommended items that is recommended by a first combination of NLP engines. In other words, match items which are recommended by all engines (e.g., (e.g., say first engine, second engine, third engine, and fourth engine) are put into bucket 1. Similarly, items are grouped into a second category based on an item comprised in the first set of recommended items that is recommended by a second combination of NLP engines. In other words, match items which are recommended by any 3 NLP engines (e.g., say (i) first engine, second engine, and fourth engine, or (ii) first engine, second engine, and third engine, or (ii) second engine, third engine, and fourth engine, or iv) first engine, third engine, and fourth engine) are put into bucket 2. Further, items are grouped into a third category based on an item comprised in the first set of recommended items that is recommended by a third combination of NLP engines. In other words, matched items which are recommended by any 2 engines (e.g., (i) first engine and second engine, or (ii) first engine and third engine, or (iii) first engine and fourth engine, or (iv) second engine and third engine, or (v) second engine and fourth engine, or (vi) third engine and fourth engine) are put into bucket 3. Furthermore, items are grouped into a fourth category based on an item comprised in the first set of recommended items that is recommended by a NLP engine. In other words, matched items which are recommended by one engine (e.g., only first engine, or only second engine, or only third engine, or only fourth engine) are put into bucket 4. Bucket 4 contains the non-overlapping matches, thus contains the highest number of recommendations. To limit the recommendation to count of 3, the system 100 considers bucket 4 by giving weightage to String, Taxonomy, Semantic and Similarity in sequence. In other words, the weightage associated to each of the plurality of NLP engines is determined based on a match of an item comprised in the fourth set of items with an associated item amongst the second set of items and accordingly the second set of recommended items are obtained in specific order. Further, the weightage of each of the plurality of NLP engines are updated based on a comparison of (i) one or more items amongst the second set of recommended items, and (ii) a fifth set of items. For instance, the second set of recommended items are validated by a domain expert or subject matter expert. In other words, updated weights are obtained based on a small set of item matches after comparing them with human validated matches. The second set of recommended items are then sorted based on the updated weightage. In other words, the matches are sorted in a specific order (e.g., say in descending order) based on the updated weights. The higher the weightage for the NLP engine(s), it would be getting higher priority for that match.

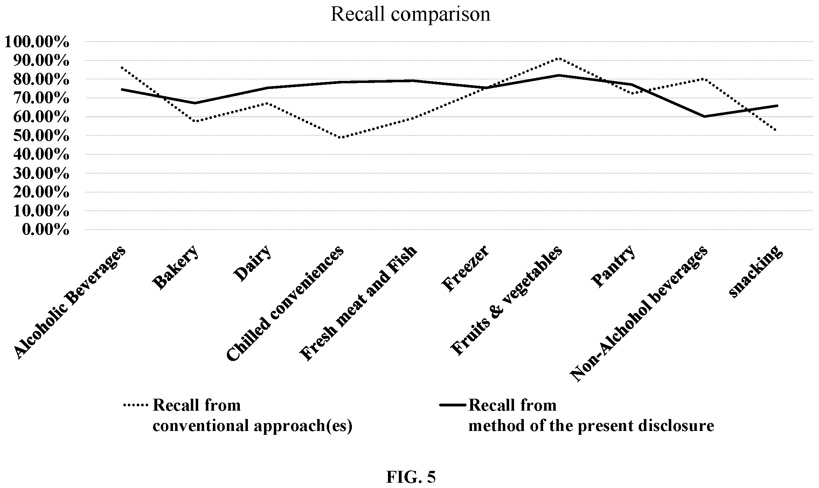

FIG. 5, with reference to FIGS. 1 through 4, depicts a graphical representation of recalled percentage against labelled matches of items, in accordance with an embodiment of the present disclosure. As depicted in FIG. 5, with the method of the present disclosure, the accuracy has increased by an average of 4.5% on all categories as compared to conventional approach.

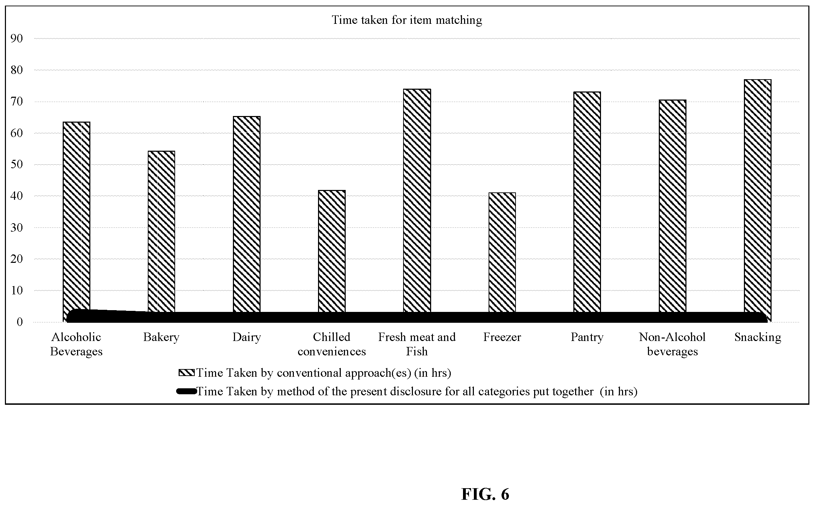

FIG. 6, with reference to FIGS. 1 through 5, depicts a graphical representation illustrating time taken for item matching (throughput) by the method of the present disclosure and conventional approach(es), in accordance with an embodiment of the present disclosure. With conventional approach, it used to take about 559.68 hours to complete the process (represented by the bar graph), whereas with method of the present disclosure the pipeline takes 3.5 hours to process and give recommendation for all categories (represented by the line graph), there by substantially reducing the time taken. Below Table 28 depicts various values illustrated in the graphical representation of FIG. 6.

Table 28

| Category name | Item Count | Time Taken by conventional approaches (in hrs) | Time Taken by method of the present disclosure (in hrs) |
|---|---|---|---|
| Alcoholic Beverages | 762 | 63.50 | 3.50 |
| Bakery | 650 | 54.17 | |
| Dairy | 783 | 65.25 | |
| Chilled conveniences | 500 | 41.67 | |
| Fresh meat and Fish | 886 | 73.83 | |
| Freezer | 492 | 41.00 | |
| Pantry | 875 | 72.92 | |
| Non-Alcohol beverages | 845 | 70.42 | |
| snacking | 923 | 76.92 | |
| **Total time taken** | **6716** | **559.68** | **3.50** |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.   A processor implemented method, comprising:

> receiving, via one or more hardware processors, information comprising a first set of items pertaining to a first entity, and a second set of items pertaining to a second entity (202);
> pre-processing, via the one or more hardware processors, the information comprising the first set of items pertaining to the first entity and the second set of items pertaining to the second entity to obtain a pre-processed dataset (204);
> obtaining, via the one or more hardware processors, a taxonomy code to at least a subset of items amongst the pre-processed dataset to obtain a set of code tagged items (206), wherein each code tagged item amongst the set of code tagged items is associated with one or more attributes;
> converting, by using a sentence encoder via the one or more hardware processors, the one or more attributes comprised in the set of code tagged items into a feature vector (208), wherein the feature vector is associated with the first set of items and the second set of items;
> building, via the one or more hardware processors, a first model and a second model using the set of code tagged items and the feature vector (210);
> predicting, by using the first model and the second model via the one or more hardware processors, (i) a first taxonomy level-based value, and (ii) the taxonomy code for each remaining item amongst the pre-processed dataset, respectively to obtain a third set of items (212);
> extracting, via the one or more hardware processors, one or more features from the subset of items, and the third set of items (214);
> processing, via the one or more hardware processors, the taxonomy code, an associated taxonomy level, and a value associated with the one or more features in a plurality of natural language processing (NLP) engines to obtain a first set of recommended items (216);
> applying, via the one more hardware processors, one or more rules on the first set of recommended items to obtain a fourth set of items, wherein each rule is associated with at least one NLP engine amongst the plurality of NLP engines (218);
> grouping, via the one more hardware processors, one or more items from the fourth set of items into one or more categories (220); and
> recommending, via the one or more hardware processors, at least a subset of items amongst the fourth set of items to obtain a second set of recommended items (222), wherein the second set of recommended items is based on a weightage associated to each of the plurality of NLP engines.

2.   The processor implemented method as claimed in claim 1, wherein the step of obtaining the taxonomy code is based on at least one of an associated item category and an associated item sub-category

> wherein the weightage associated to each of the plurality of NLP engines is determined based on a match of an item comprised in the fourth set of items with an associated item amongst the second set of items, and
> wherein the method further comprises updating the weightage of each of the plurality of NLP engines based on a comparison of (i) one or more items amongst the second set of recommended items, and (ii) a fifth set of items; and sorting the second set of recommended items based on the updated weightage.

3.   The processor implemented method as claimed in claim 1, wherein the step of extracting the one or more features from the subset of items, and the third set of items comprises:

> concatenating one or more attributes associated with the subset of items, and the third set of items;
> obtaining a predefined attribute value for each taxonomy code of the subset of items, and the third set of items;

performing a comparison of keywords between the subset of items, and the third set of items; and
extracting the one or more features from the subset of items, and the third set of items based on the comparison and the predefined attribute value.

4. The processor implemented method as claimed in claim 1, wherein the step of processing by a first NLP engine amongst the plurality of NLP engines comprises:

filtering the second set of items for each item comprised in the first set of items based on the taxonomy code;
creating a feature summary for the first set of items and the second set of items based on the value of the one or more features;
converting the feature summary into the feature vector of the first set of items and the second set of items;
computing a cosine similarity score for the first set of items and the second set of items based on the feature vector of the first set of items and the second set of items; and
obtaining the first set of recommended items based on the cosine similarity score,
wherein the step of processing by a second NLP engine amongst the plurality of NLP engines comprises:
for each taxonomy code:

traversing through the associated taxonomy level for determining a match between an item of the first set of items and an item of the second set of items to obtain a set of level-based items;
concatenating one or more attributes of the set of level-based items to obtain a set of concatenated attributes;
converting the set of concatenated attributes into the feature vector of the first set of items and the second set of items;
computing a cosine distance score between the first set of items and the second set of items based on the feature vector of the first set of items and the second set of items;
computing a taxonomy based matching score based on the cosine distance score; and
obtaining the first set of recommended items based on the taxonomy based matching score,
wherein the step of processing by a third NLP engine amongst the plurality of NLP engines comprises:

creating an index of the second set of items;
identifying a semantic match for a query item associated with the first set of items in the index of the second set of items;
computing a semantic matching score based on the semantic match; and
obtaining the first set of recommended items based on the semantic matching score, and
wherein the step of processing by a fourth NLP engine amongst the plurality of NLP engines comprises:

performing a comparison of a name associated with each item amongst the first of items with each item amongst the second of items;
computing a string matching score based on the comparison; and
obtaining the first set of recommended items based on the string matching score.

5. The processor implemented method as claimed in claim 1, wherein the step of grouping, comprises:

grouping one or more items into a first category based on an item comprised in the first set of recommended items that is recommended by a first combination of NLP engines;
grouping one or more items into a second category based on an item comprised in the first set of recommended items that is recommended by a second combination of NLP engines;
grouping one or more items into a third category based on an item comprised in the first set of recommended items that is recommended by a third combination of NLP engines; and
grouping one or more items into a fourth category based on an item comprised in the first set of recommended items that is recommended by a NLP engine.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

receive information comprising a first set of items pertaining to a first entity, and a second set of items pertaining to a second entity;

pre-process the information comprising the first set of items pertaining to the first entity and the second set of items pertaining to the second entity to obtain a pre-processed dataset;

obtain a taxonomy code to at least a subset of items amongst the pre-processed dataset to obtain a set of code tagged items, wherein each code tagged item amongst the set of code tagged items is associated with one or more attributes;

convert, by using a sentence encoder, the one or more attributes comprised in the set of code tagged items into a feature vector, wherein the feature vector is associated with the first set of items and the second set of items;

build a first model and a second model using the set of code tagged items and the feature vector;

predict, by using the first model and the second model, (i) a first taxonomy level-based value, and (ii) the taxonomy code for each remaining item amongst the pre-processed dataset, respectively to obtain a third set of items;

extract one or more features from the subset of items, and the third set of items;

process the taxonomy code, an associated taxonomy level, and a value associated with the one or more features in a plurality of natural language processing (NLP) engines to obtain a first set of recommended items;

apply one or more rules on the first set of recommended items to obtain a fourth set of items, wherein each rule is associated with at least one NLP engine amongst the plurality of NLP engines;

group one or more items from the fourth set of items into one or more categories; and

recommend at least a subset of items amongst the fourth set of items to obtain a second set of recommended items, wherein the second set of recommended items is based on a weightage associated to each of the plurality of NLP engines.

7. The system as claimed in claim 6, wherein the taxonomy code is based on at least one of an associated item category and an associated item sub-category,

wherein the weightage associated to each of the plurality of NLP engines is determined based on a match of an item comprised in the fourth set of items with an associated item amongst the second set of items, and

wherein the one or more hardware processors are further configured by the instructions to

update the weightage of each of the plurality of NLP engines based on a comparison of (i) one or more items amongst the second set of recommended items, and (ii) a fifth set of items; and

sort the second set of recommended items based on the updated weightage.

8. The system as claimed in claim 6, wherein the one or more features are extracted from the subset of items, and the third set of items by

concatenating one or more attributes associated with the subset of items, and the third set of items;

obtaining a predefined attribute value for each taxonomy code of the subset of items, and the third set of items;

performing a comparison of keywords between the subset of items, and the third set of items; and

extracting the one or more features from the subset of items, and the third set of items based on the comparison and the predefined attribute value.

9. The system as claimed in claim 6, wherein a first NLP engine amongst the plurality of NLP engines processes the taxonomy code, the associated taxonomy level, and the value associated with the one or more features by:

filtering the second set of items for each item comprised in the first set of items based on the taxonomy code;

creating a feature summary for the first set of items and the second set of items based on the value of the one or more features;

converting the feature summary into the feature vector of the first set of items and the second set of items;

computing a cosine similarity score for the first set of items and the second set of items based on the feature vector of the first set of items and the second set of items; and

obtaining the first set of recommended items based on the cosine similarity score,

wherein a second NLP engine amongst the plurality of NLP engines processes the taxonomy code, the associated taxonomy level, and the value associated with the one or more features by:

for each taxonomy code:

traversing through the associated taxonomy level for determining a match between an item of the first set of items and an item of the second set of items to obtain a set of level-based items;

concatenating one or more attributes of the set of level-based items to obtain a set of concatenated attributes;

converting the set of concatenated attributes into the feature vector of the first set of items and the second set of items;

computing a cosine distance score between the first set of items and the second set of items based on the feature vector of the first set of items and the second set of items;

computing a taxonomy based matching score based on the cosine distance score; and

obtaining the first set of recommended items based on the taxonomy based matching score,

wherein a third NLP engine amongst the plurality of NLP engines processes the taxonomy code, the associated taxonomy level, and the value associated with the one or more features by:

creating an index of the second set of items;

identifying a semantic match for a query item associated with the first set of items in the index of the second set of items;

computing a semantic matching score based on the semantic match; and

obtaining the first set of recommended items based on the semantic matching score, and

wherein a fourth NLP engine amongst the plurality of NLP engines processes the taxonomy code, the associated taxonomy level, and the value associated with the one or more features by:

performing a comparison of a name associated with each item amongst the first of items with each item amongst the second of items;

computing a string matching score based on the comparison; and

obtaining the first set of recommended items based on the string matching score.

10. The system as claimed in claim 6, wherein the one or more categories are obtained:

grouping one or more items into a first category based on an item comprised in the first set of recommended items that is recommended by a first combination of NLP engines;

grouping one or more items into a second category based on an item comprised in the first set of recommended items that is recommended by a second combination of NLP engines;

grouping one or more items into a third category based on an item comprised in the first set of recommended items that is recommended by a third combination of NLP engines; and

grouping one or more items into a fourth category based on an item comprised in the first set of recommended items that is recommended by a NLP engine.

11. One or more non-transitory machine-readable information storage mediums comprising one or more instructions which when executed by one or more hardware processors cause:

receiving information comprising a first set of items pertaining to a first entity, and a second set of items pertaining to a second entity;

pre-processing the information comprising the first set of items pertaining to the first entity and the second set of items pertaining to the second entity to obtain a pre-processed dataset;

obtaining a taxonomy code to at least a subset of items amongst the pre-processed dataset to obtain a set of code tagged items , wherein each code tagged item amongst the set of code tagged items is associated with one or more attributes;

converting, by using a sentence encoder, the one or more attributes comprised in the set of code tagged items into a feature vector , wherein the feature vector is associated with the first set of items and the second set of items;

building a first model and a second model using the set of code tagged items and the feature vector;

predicting, by using the first model and the second model, (i) a first taxonomy level-based value, and (ii) the taxonomy code for each remaining item amongst the pre-processed dataset, respectively to obtain a third set of items;

extracting one or more features from the subset of items, and the third set of items;

processing the taxonomy code, an associated taxonomy level, and a value associated with the one or more features in a plurality of natural language processing (NLP) engines to obtain a first set of recommended items;

applying one or more rules on the first set of recommended items to obtain a fourth set of items, wherein each rule is associated with at least one NLP engine amongst the plurality of NLP engines;

grouping one or more items from the fourth set of items into one or more categories; and

recommending at least a subset of items amongst the fourth set of items to obtain a second set of recommended items, wherein the second set of recommended items is based on a weightage associated to each of the plurality of NLP engines.

12. The one or more non-transitory machine-readable information storage mediums as claimed in claim 11, wherein the step of obtaining the taxonomy code is based on at least one of an associated item category and an associated item sub-category, wherein the weightage associated to each of the plurality of NLP engines is determined based on a match of an item comprised in the fourth set of items with an associated item amongst the second set of items, and wherein the one or more instructions which when executed by the one or more hardware processors further cause:

updating the weightage of each of the plurality of NLP engines based on a comparison of (i) one or more items amongst the second set of recommended items, and (ii) a fifth set of items; and
sorting the second set of recommended items based on the updated weightage.

13. The one or more non-transitory machine-readable information storage mediums as claimed in claim 11, wherein the step of extracting the one or more features from the subset of items, and the third set of items comprises:

concatenating one or more attributes associated with the subset of items, and the third set of items;
obtaining a predefined attribute value for each taxonomy code of the subset of items, and the third set of items;
performing a comparison of keywords between the subset of items, and the third set of items; and
extracting the one or more features from the subset of items, and the third set of items based on the comparison and the predefined attribute value.

14. The one or more non-transitory machine-readable information storage mediums as claimed in claim 11, wherein the step of processing by a first NLP engine amongst the plurality of NLP engines comprises:

filtering the second set of items for each item comprised in the first set of items based on the taxonomy code;
creating a feature summary for the first set of items and the second set of items based on the value of the one or more features;
converting the feature summary into the feature vector of the first set of items and the second set of items;
computing a cosine similarity score for the first set of items and the second set of items based on the feature vector of the first set of items and the second set of items; and
obtaining the first set of recommended items based on the cosine similarity score,
wherein the step of processing by a second NLP engine amongst the plurality of NLP engines comprises:
for each taxonomy code:

traversing through the associated taxonomy level for determining a match between an item of the first set of items and an item of the second set of items to obtain a set of level-based items;
concatenating one or more attributes of the set of level-based items to obtain a set of concatenated attributes;
converting the set of concatenated attributes into the feature vector of the first set of items and the second set of items;
computing a cosine distance score between the first set of items and the second set of items based on the feature vector of the first set of items and the second set of items;
computing a taxonomy based matching score based on the cosine distance score; and
obtaining the first set of recommended items based on the taxonomy based matching score,
wherein the step of processing by a third NLP engine amongst the plurality of NLP engines comprises:

creating an index of the second set of items;
identifying a semantic match for a query item associated with the first set of items in the index of the second set of items;
computing a semantic matching score based on the semantic match; and
obtaining the first set of recommended items based on the semantic matching score, and
wherein the step of processing by a fourth NLP engine amongst the plurality of NLP engines comprises:

performing a comparison of a name associated with each item amongst the first of items with each item amongst the second of items;
computing a string matching score based on the comparison; and
obtaining the first set of recommended items based on the string matching score.

**15.** The one or more non-transitory machine-readable information storage mediums as claimed in claim 11, wherein the step of grouping, comprises:

grouping one or more items into a first category based on an item comprised in the first set of recommended items that is recommended by a first combination of NLP engines;
grouping one or more items into a second category based on an item comprised in the first set of recommended items that is recommended by a second combination of NLP engines;
grouping one or more items into a third category based on an item comprised in the first set of recommended items that is recommended by a third combination of NLP engines; and
grouping one or more items into a fourth category based on an item comprised in the first set of recommended items that is recommended by a NLP engine.

SYSTEM
100

MEMORY
102

DATABASE
108

HARDWARE PROCESSOR(S)
104

INTERFACE(S)
106

**FIG. 1**

FIG. 2

receiving information comprising a first set of items pertaining to a first entity, and a second set of items pertaining to a second entity ⟋ 202

↓

pre-processing the information comprising the first set of items pertaining to the first entity and the second set of items pertaining to the second entity to obtain a pre-processed dataset ⟋ 204

↓

obtaining a taxonomy code to at least a subset of items amongst the pre-processed dataset to obtain a set of code tagged items, wherein each code tagged item amongst the set of code tagged items is associated with one or more attributes ⟋ 206

↓

converting, by using a sentence encoder, the one or more attributes comprised in the set of code tagged items into a feature vector, wherein the feature vector is associated with the first set of items and the second set of items ⟋ 208

↓

building a first model and a second model using the set of code tagged items and the feature vector ⟋ 210

↓

predicting, by using the first model and the second model, (i) a first taxonomy level-based value, and (ii) the taxonomy code for each remaining item amongst the pre-processed dataset, respectively to obtain a third set of items ⟋ 212

↓

extracting one or more features from the subset of items, and the third set of items ⟋ 214

↓

(A)

**FIG. 3A**

Ⓐ

processing the taxonomy code, an associated taxonomy level, and a value associated with the one or more features in a plurality of natural language processing (NLP) engines to obtain a first set of recommended items ⟋～ 216

applying one or more rules on the first set of recommended items to obtain a fourth set of items, wherein each rule is associated with at least one NLP engine amongst the plurality of NLP engines ⟋～ 218

grouping one or more items from the fourth set of items into one or more categories ⟋～ 220

recommending at least a subset of items amongst the fourth set of items to obtain a second set of recommended items, wherein the second set of recommended items is based on a weightage associated to each of the plurality of NLP engines ⟋～ 222

**FIG. 3B**

**FIG. 4**

Recall comparison

····· Recall from
conventional approach(es)

—— Recall from
method of the present disclosure

FIG. 5

EP 4 589 468 A1

Time taken for item matching

☒ Time Taken by conventional approach(es) (in hrs)
━● Time Taken by method of the present disclosure for all categories put together (in hrs)

**FIG. 6**

EP 4 589 468 A1

Europäisches Patentamt
European Patent Office
Office européen des brevets

# EUROPEAN SEARCH REPORT

**Application Number**

EP 25 15 0248

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 184 416 A1 (TATA CONSULTANCY SERVICES LTD [IN]) 24 May 2023 (2023-05-24) * claims 1,2,7 * | 1-15 | INV. G06F40/30 G06Q30/0601 |
| A | US 11 244 374 B2 (REALM IP LLC [US]) 8 February 2022 (2022-02-08) * claim 2 * | 1-15 | |

**TECHNICAL FIELDS SEARCHED (IPC)**

G06F
G06Q

The present search report has been drawn up for all claims

| Place of search | Date of completion of the search | Examiner |
|---|---|---|
| The Hague | 12 May 2025 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 589 468 A1**

## ANNEX TO THE EUROPEAN SEARCH REPORT
## ON EUROPEAN PATENT APPLICATION NO.

EP 25 15 0248

12-05-2025

| Patent document cited in search report | | Publication date | Patent family member(s) | | Publication date |
|---|---|---|---|---|---|
| EP 4184416 | A1 | 24-05-2023 | EP | 4184416 A1 | 24-05-2023 |
| | | | US | 2023153880 A1 | 18-05-2023 |
| US 11244374 | B2 | 08-02-2022 | US | 2020074525 A1 | 05-03-2020 |
| | | | US | 2020104300 A1 | 02-04-2020 |
| | | | US | 2022148069 A1 | 12-05-2022 |
| | | | WO | 2020047348 A1 | 05-03-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421003421